# FASCICULE DE BREVET EUROPEEN

(11) **EP 3 898 304 B1**
(45) Date de publication et mention de la délivrance du brevet: **08.02.2023**
(21) Numéro de dépôt: 19820700.3
(22) Date de dépôt: 09.12.2019
(51) Int. Cl.: B60K 5/12, B62D 21/15, B62D 25/08

(54) **VÉHICULE AUTOMOBILE COMPRENANT UN SUPPORT DE MOTEUR ET UN CHÂSSIS**
KRAFTFAHRZEUG MIT EINEM MOTORTRÄGER UND EINEM FAHRGESTELL
MOTOR VEHICLE COMPRISING AN ENGINE SUPPORT AND A CHASSIS

(30) Priorité: 20.12.2018 FR 1873694
(43) Date de publication de la demande: 27.10.2021
(73) Titulaire: Renault s.a.s, 92100 Boulogne Billancourt (FR)
(72) Inventeur: GHIRARDINI, Armand, 78430 Louveciennes (FR)
(74) Mandataire: Renault Group
(86) Numéro de dépôt international: PCT/EP2019/084175
(87) Numéro de publication internationale: WO 2020/126599

(56) Documents cités:
- EP-A2- 1 361 099
- US-A- 4 381 043
- US-A1- 2012 084 965
- US-A1- 2017 113 533
- US-A1- 2017 117 570

## Description

L'invention a trait à un véhicule automobile comprenant un châssis et un support pour soutenir le moteur.

De manière connue, dans un véhicule automobile, le groupe motopropulseur se trouve dans le compartiment moteur. Le groupe motopropulseur comprend un moteur qui est maintenu sur des longerons, faisant partie du châssis du véhicule, au moyen des supports. Par exemple, le moteur est maintenu sur les longerons par l'intermédiaire d'un premier support placé du côté de la boîte de vitesse, d'un deuxième support placé près du moteur, et d'un troisième support qui est la biellette de reprise de couple.

Dans un exemple de réalisation du véhicule, le support, placé du côté de la boîte de vitesse, a pour fonction de maintenir le moteur en place et de filtrer les vibrations parasites de celui-ci afin d'éviter les remontées de bruit dans le véhicule. Les vibrations parasites sont originaires par exemple du fonctionnement de la boîte de vitesse.

Pour ce faire, le support est fixé sur un longeron du véhicule tandis qu'une batterie est posée sur ledit support pour servir de masse acoustique. Ainsi, le poids de la batterie permet de limiter la propagation des vibrations dans le support et dans le châssis, ce qui permet de réduire le bruit généré par ces vibrations.

Toutefois, dans certains modèles de véhicule, notamment dans un véhicule hybride, la batterie du véhicule est déportée dans le coffre arrière, car il n'y a pas assez d'espace dans le compartiment moteur. La batterie ne peut donc pas être utilisée comme une masse acoustique.

Par ailleurs, les exigences acoustiques sont plus strictes dans un véhicule hybride que dans un véhicule équipé seulement d'un moteur thermique. En effet, lorsque le véhicule hybride est en mode de fonctionnement uniquement électrique, le moteur thermique est éteint et ne génère donc pas de bruit, dit bruit du moteur, pour dissimuler les bruits de vibration. Afin de diminuer ces bruits, les vibrations doivent être réduites au minimum.

Pour résoudre ce problème des vibrations parasites, on utilise des supports hydrauliques qui ont pour fonction d'amortissement à l'aide d'un fluide hydraulique. Toutefois, ces supports hydrauliques sont coûteux et parfois encombrants.

Une solution alternative aux supports hydrauliques est d'augmenter la rigidité du support afin de l'empêcher de vibrer et de mettre un tirant sur une extrémité du support qui est en porte-à-faux. Toutefois, la solution technique de rigidification et en particulier de l'ajout d'un tirant pose généralement un problème quant au comportement mécanique des pièces lors d'un crash frontal.

La cinématique en cas de crash frontal doit être de telle manière que le support joue le rôle d'un fusible. Cela signifie que le support doit se rompre de manière à ce que le moteur soit libéré et se glisse le long du longeron vers l'arrière et vers le bas. De cette manière, on évite que le moteur pénètre dans l'habitacle au niveau où sont posés les membres inférieurs du passager. On évite donc les blessures des membres inférieurs du passager.

Le support doit être agencé de sorte à ne pas compromettre la déformation du longeron. En effet, dans une collision frontale, il est important que le longeron puisse se déformer pour emmagasiner l'énergie du choc.

Un support trop rigide, comme celui proposé pour résoudre le problème des vibrations, risque de ne pas se casser pendant la collision. Par conséquent, en cas de crash, le moteur, étant porté par le support, recule parallèlement au longeron et pénètre directement dans l'habitacle au niveau des membres inférieurs du passager.

Dans ce cas, il y a un risque important de blesser le ou les passagers présents dans le véhicule.

Un véhicule automobile est par exemple connu du document EP 1 361 099 A1.

Il est donc nécessaire de trouver une solution technique permettant une cinématique en cas de choc qui engendre le moins de risque de blessure possible au(x) passager(s) présent(s) dans le véhicule tout en réduisant des vibrations dans le compartiment moteur pendant le fonctionnement normal du véhicule.

Pour cela, l'invention concerne un véhicule automobile, comme défini dans la revendication 1, comprenant :
- un châssis comprenant un longeron;
- un support destiné à soutenir un moteur dans un compartiment moteur ; le support étant fixé directement au longeron.

Selon l'invention, le véhicule comprend une pièce de liaison reliant le support à une première structure du châssis qui est située au-dessus du longeron. La pièce de liaison comprend un corps principal, une première vis de fixation reliant le support à la pièce de liaison, une deuxième vis de fixation reliant le châssis à la pièce de liaison, une glissière réalisée dans le corps principal et recevant les première et deuxième vis de fixation, et au moins une aile latérale disposée le long du corps principal.

La solution proposée permet de résoudre le problème précité. En particulier, la glissière présente dans la pièce de liaison permet l'échappement d'au moins une des première et deuxième vis de fixation lors du choc frontal du véhicule. Autrement dit, au moins une des vis fixation, notamment la première vis de fixation, coulisse dans la glissière.

En effet, le choc frontal cause dans un premier temps la déformation à l'avant du longeron. Le support, étant fixé directement au longeron, est poussé vers l'arrière par cette déformation. Ce déplacement du support entraîne un coulissement de la première vis de fixation dans la glissière en direction de rapprochement de la deuxième vis de fixation. Etant donné que la première structure fait partie du châssis qui est de manière générale une pièce rigide, la deuxième vis de fixation reliant la pièce de liaison à la première structure n'est pas déplacée autant que la première vis de fixation. En même temps, le support continue sa course vers l'arrière. Par conséquent, la pièce de liaison, guidée par le mouvement de la première vis de fixation, pivote en étant déformée vers l'arrière. La pièce de fixation pivote autour de la deuxième vis de fixation.

Etant donné que la première structure est située à un niveau supérieur du longeron, le pivotement de la pièce de liaison vers l'arrière fait redescendre la première vis de fixation vers le bas jusqu'à être en butée contre une extrémité inférieure de la glissière, ce qui contraint le support et le moteur à descendre vers le bas en reculant.

La déformation de la pièce de liaison est facilitée grâce à la présence de la glissière. La pièce de liaison, ainsi déformée, sert de fusible afin d'interrompre les efforts du support exercés sur la première structure du châssis. De cette manière, la première structure ne sera pas entraînée vers l'arrière par le support et par le moteur en cas de crash frontal, ce qui permet d'éviter que la première structure pénètre dans l'habitacle et cause des dégâts indésirables.

Le pivotement et la déformation de la pièce de liaison permettent également d'absorber une partie de l'énergie du choc.

Par conséquent, l'espace dans l'habitacle où sont posés habituellement les membres inférieurs du passager est épargné. On réduit donc le risque de blessure causé par le recul du moteur en cas de choc frontal.

Par ailleurs, la pièce de liaison est dotée d'au moins une aile latérale permettant de réduire les vibrations dans une direction parallèle à l'aile latérale, pendant le fonctionnement normal du véhicule.

Le véhicule selon l'invention peut optionnellement comprendre une ou plusieurs des caractéristiques suivantes :
- la première structure du châssis est une rampe d'éjection destinée à éjecter un élément contenu dans le compartiment moteur dans une direction l'éloignant du sol lors d'un choc frontal ; de manière habituelle, la rampe d'éjection est située au même niveau que les membres inférieurs du passager lorsqu'il est installé dans le véhicule ; ainsi, le support, étant fixé en dessous de cette rampe et étant dirigé à un niveau plus bas lors du choc frontal, emmène le moteur à descendre de sorte à éviter l'espace de l'habitacle à protéger ;
- le couple de serrage appliqué aux première et deuxième vis de fixation est compris entre 19 Nm et 21.5 Nm ; les vis de fixation, ainsi serrées, peuvent être s'échapper dans la glissière lors du choc frontal ;
- la portion de la première structure, qui est en contact avec la pièce de liaison, présente une épaisseur égale ou supérieure à l'épaisseur de la pièce de liaison ;
- la portion du support, qui est en contact avec la pièce de liaison, présente une épaisseur égale ou supérieure à l'épaisseur de la pièce de liaison ; les caractéristiques selon les deux alinéas précédents, seules ou en combinaison, permettent d'assurer une rigidité suffisante à l'ensemble du support, de la pièce de liaison et de la première structure pour réduire, voire pour supprimer les vibrations propageant dans cet ensemble ;
- la pièce de liaison comprend deux ailes latérales parallèles et disposées en symétrie par rapport à la glissière centrale ; la présence de deux ailes latérales réduit davantage les vibrations dans la direction parallèle à ces ailes ; de manière générale, il s'agit de la direction transversale perpendiculaire à la direction longitudinale du véhicule ;
- la ou les ailes latérales sont venues de matière avec le corps principal et formées par pliage ; il s'agit donc d'un mode de réalisation simple et peu coûteux de la pièce de liaison.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
La figure 1 représente une vue en perspective montrant l'avant d'un ensemble comprenant un support de moteur, une pièce de liaison, un longeron et une première structure du châssis, ledit ensemble faisant partie d'un véhicule réalisé selon un mode de réalisation selon l'invention;
La figure 2 représente une vue en perspective montrant l'arrière de l'ensemble de la figure 1 et d'une partie du moteur montée sur le support de l'ensemble;
La figure 3 représente une vue agrandie du détail référencé III sur la figure 1;
La figure 4 représente une vue en perspective de la pièce de liaison;
La figure 5 représente l'ensemble avant le choc frontal;
La figure 6 représente l'état de l'ensemble pendant le choc frontal ;
La figure 7 représente l'état de l'ensemble après le choc frontal.

Les éléments structurellement et fonctionnellement identiques, présents dans plusieurs figures distinctes, sont affectés d'une seule et même référence numérique ou alphanumérique.

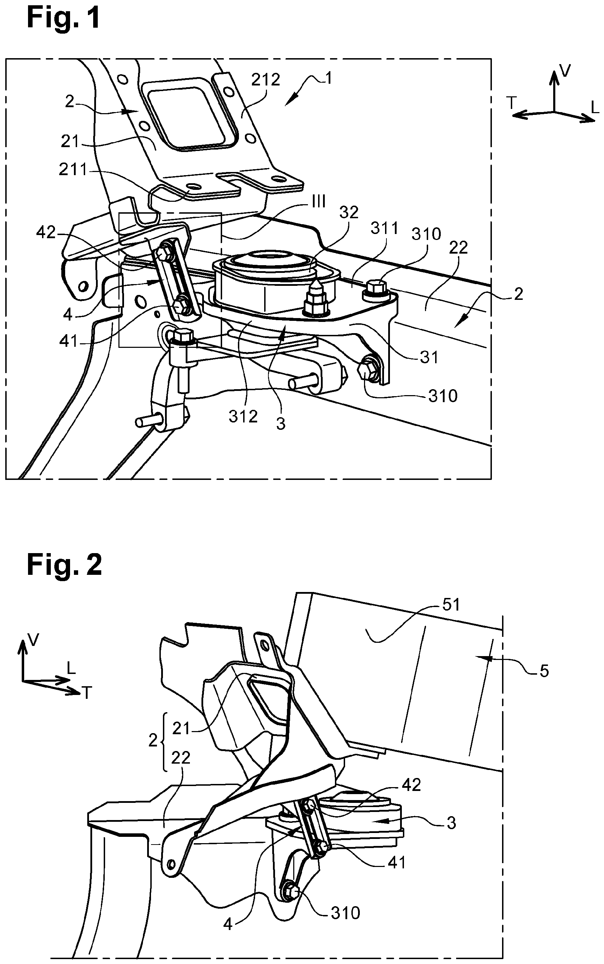

Dans la suite de la description, on adoptera une direction verticale représentée par l'axe V, une direction transversale horizontale ou latérale horizontale représentée par l'axe T et une direction longitudinale horizontale représentée par l'axe L. Ces trois axes sont illustrés sur les figures 1 à 7.

La direction longitudinale horizontale L est la direction de déplacement en marche avant du véhicule. Les termes « avant » et «arrière » sont définis par rapport à cette direction longitudinale L. La direction verticale V est la direction perpendiculaire au sol sur lequel se déplace le véhicule. Les termes « haut », « bas », « inférieur » et « supérieur » sont définis par rapport à cette direction verticale V.

En référence à la figure 1 et à la figure 2, un ensemble 1, faisant partie du véhicule selon l'invention, comprend un châssis 2, un support 3 destiné à soutenir le moteur dans le compartiment moteur, et une pièce de liaison 4 reliant le support 3 au châssis 2. Un moteur 5 est fixé sur des longerons du châssis en partie à l'aide du support 3.

Plus précisément, le support 3 fixé d'une part directement sur un longeron 22 et d'autre part à une rampe d'éjection 21 par l'intermédiaire de la pièce de liaison 4. La rampe d'éjection 21 et le longeron 22 font partie du même châssis 2.

Le support 3 comprend une base 31 présentant un premier côté 311 qui est en contact direct avec le longeron 22. Les vis de fixation 310 relient ce premier côté 311 au longeron 22. La base 31 présente un deuxième côté 312 parallèle au premier côté 311. Un trou taraudé est réalisé sur ce deuxième côté 312 pour coopérer avec une première vis de fixation 41 qui attache le support 3 à la pièce de liaison 4.

Le support 3 comprend en outre un amortisseur 32, réalisé par exemple en caoutchouc, sur lequel est posé le moteur. L'amortisseur 32 permet d'absorber et/ou d'atténuer des vibrations dans la direction verticale du moteur.

Comme illustré sur les figures 1 et 2, la pièce de liaison 4 est reliée à une autre structure du châssis, ici une rampe d'éjection 21, qui est située au-dessus du longeron 22. Une deuxième vis de fixation 42 relie la pièce de liaison 4 à la rampe d'éjection 21.

La rampe d'éjection 21 comprend une première plaque 211 inclinée légèrement par rapport à l'horizontale et une deuxième plaque 212 inclinée par rapport à la direction verticale V.

La rampe d'éjection 21 est située devant l'espace de l'habitacle où sont posées des jambes d'un passager. Cet espace est encore appelé espace à protéger. En cas de crash frontal, la rampe d'éjection 21 a pour fonction de diriger une partie 51 du moteur 5 qui se situe en face vers le haut pour empêcher cette partie 51 de diriger tout droit vers l'espace à protéger.

La partie 51 est un membre fixé au moteur, par exemple un boîtier d'alimentation électrique (« power electric box » en anglais) qui a tendance à se détacher du moteur 5 pendant la collision. Pendant la collision, la partie 51 glisse sur la première plaque 211 puis sur la deuxième plaque 212 qui la dirige vers le capot. La rampe d'éjection 21 est donc une pièce de protection de l'habitacle.

Comme décrit précédemment, la pièce de liaison 4 relie le deuxième bord 312 du support 3 à la rampe d'éjection 21. D'autre part, le premier bord 311 du support 3 est fixé au longeron 22. Ainsi, le support 3 est fixé à des endroits différents du châssis 2, ce qui permet une fixation plus stable du support 3 au châssis 2. La fixation stable du support au châssis est nécessaire lorsque le support 3 est en porte-à-faux comme dans l'exemple illustré. Par conséquent, le support 3 forme une base stable pour le moteur 5.

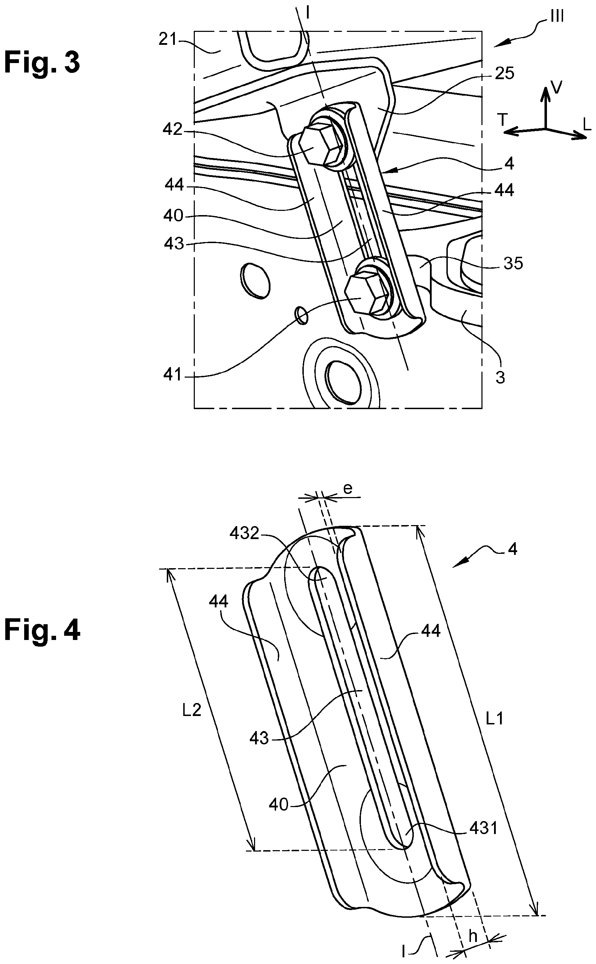

En référence à la figure 3 et à la figure 4, la pièce de liaison 4 comprend un corps principal 40 allongé, une glissière 43, et deux ailes latérales 44 s'étendant le long du corps principal 40. La glissière 43 est ici une rainure pratiquée dans le corps principal 40.

Deux ailes latérales 44 sont perpendiculaires au plan contenant le corps principal 40. La section transversale de la pièce de liaison 4 présente donc une forme de U. Ici, les ailes latérales 44 sont parallèles à la direction transversale T de sorte à réduire les vibrations et donc le bruit de vibrations dans cette direction. La pièce de liaison 4 assure ainsi une bonne performance acoustique.

Dans l'exemple illustre, la pièce de liaison 4 présente une forme symétrique pour éviter tout risque de perte de performance acoustique en cas d'inversion de montage. La symétrie de la pièce de liaison 4 fait que la performance acoustique reste la même, quel que soit le sens de montage de ladite pièce par rapport au châssis et au support.

Selon l'invention et comme dans cet exemple, le corps principal présente une longueur L1 comprise entre 80 mm 81 mm. La glissière présente une longueur L2 comprise entre 60 mm et 62 mm. Les ailes latérales 44 présentent une hauteur h compris entre 10 mm et 11 mm. Enfin, la pièce de liaison 4 présente une épaisseur entre 1.9 mm et 2.1 mm. La pièce de liaison ainsi dimensionnée est compacte, ce qui permet son intégration dans un espace restreint.

Dans un exemple de réalisation de l'invention, la longueur L1 du corps principal est 80 mm, la hauteur h des ailes latérales 44 est 10 mm et l'épaisseur de la pièce de liaison est 2 mm.

Selon l'invention et comme dans cet exemple, afin d'apporter suffisamment de rigidité à l'ensemble du support 3, de la pièce de liaison 4 et de la rampe d'éjection 3, la portion 35 du support 3, qui est en contact direct avec la pièce de liaison présente une épaisseur supérieure l'épaisseur e de la pièce de liaison 4. Pour augmenter encore la rigidité de l'ensemble, l'épaisseur de la portion 25 du châssis 2 doit être également supérieure à l'épaisseur e de la pièce de liaison 4. Cette rigidité accrue permet de réduire ou d'empêcher la vibration des pièces de l'ensemble. Les vibrations étant ainsi atténuées, voire supprimées, les bruits originaires de ces vibrations seront donc réduits ou supprimés.

Toutefois, le dimensionnement décrit dans le paragraphe précédent est réalisé de manière à ce que le supplément de rigidité apporté à la pièce de liaison 4 ne soit pas excessif pour faciliter la déformation de ladite pièce durant le choc frontal. Cela signifie que la pièce de liaison 4 doit être suffisamment rigide pour réduire de manière efficace les vibrations, et donc le bruit, et en même temps qu'elle doit être sécable en cas de choc frontal.

Comme observé sur les figures 3 et 4, les première et deuxième vis de fixation 41 et 43 sont insérées dans la glissière 43, et de manière plus précise, respectivement dans une extrémité inférieure 431 et dans une extrémité supérieure 432 de la glissière 43.

La pièce de liaison 4 est orientée, ici, de telle manière que l'axe longitudinal l du corps principal 40 est incliné vers l'arrière par rapport à l'axe vertical V.

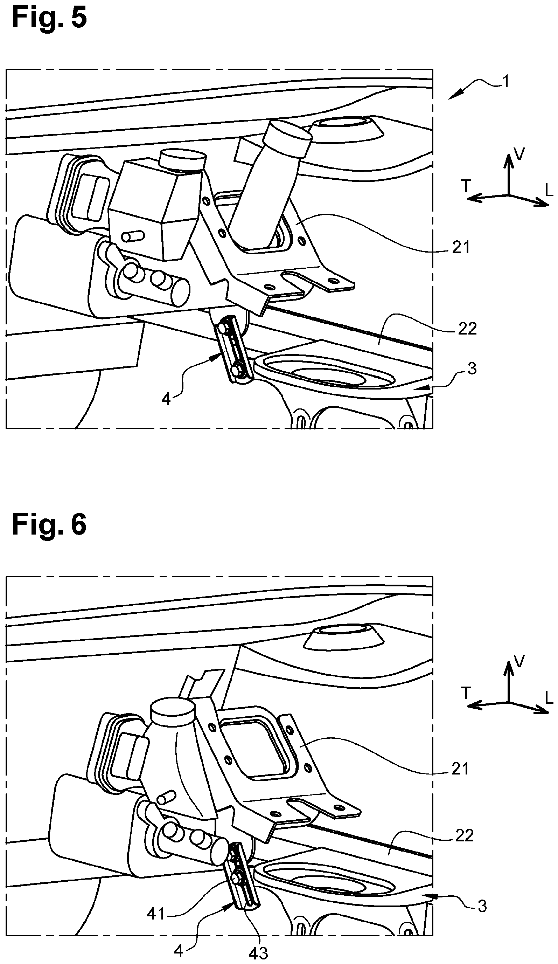

Les figures 5 à 7 illustrent la cinématique, c'est-à-dire le comportement mécanique de chacune des pièces de l'ensemble 1, en cas de choc frontal. Pour une raison de clarté, seule la base 31 du support est illustrée sur ces figures.

Sur la figure 5, l'ensemble 1 est dans un état initial non déformé avant le choc frontal. Dans cet état initial, l'ensemble 1 reste identique à l'ensemble décrit sur les figures 1 à 4.

Sur la figure 6, l'ensemble 1 est dans un état intermédiaire à un instant t pendant le choc frontal. Dans cet état intermédiaire, on remarque que la partie avant du longeron 22 est écrasée à cause de l'impact avec un objet ou un autre véhicule qui le précède. La déformation du longeron 22 engendre un déplacement vers l'arrière du support 3 qui reste toujours fixé au longeron 22. Le déplacement du support 3 entraîne un coulissement de la première vis de fixation 41 dans la glissière 43 dans la direction de rapprochement de la deuxième vis de fixation 42. Dans cet exemple, la première vis de fixation 41 coulisse vers le haut.

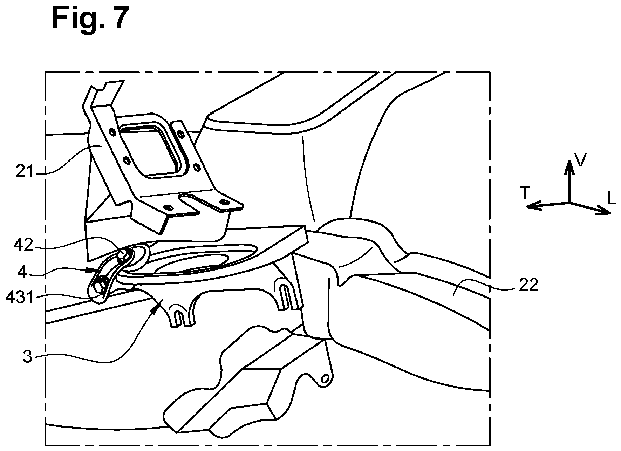

Sur la figure 7, l'ensemble est dans un état final à la fin du choc frontal. Dans cet état final déformé, le longeron 22 est davantage déformé tandis que le support 3 se trouve en dessous de la rampe d'éjection 21 et est orienté vers le bas. La pièce de liaison 4 est déformée et orientée différemment que lorsque l'ensemble 1 est dans l'état initial non déformé. Précisément, la pièce de liaison 4, malgré la déformation, est inclinée vers l'avant par rapport à l'axe vertical V. Autrement dit, dans l'état final, l'extrémité inférieure de la pièce de liaison se trouve à l'arrière par rapport à son extrémité supérieure.

Ainsi, entre l'état intermédiaire et l'état final, la pièce de liaison 4 pivote de l'avant vers l'arrière autour de la deuxième vis de fixation 42. En effet, étant donné que la rampe d'éjection 21 fait partie du châssis qui est une pièce très rigide, la fixation de la pièce de liaison 4 avec la rampe d'éjection 21, c'est-à-dire la deuxième vis de fixation 42, se déplace très peu ou ne se déplace presque pas. Or, le support 3 continue à reculer avec la première vis de fixation 41 coulissant dans la glissière 43. La pièce de liaison 4, entraînée par la première vis de fixation 41, n'a donc que la possibilité de pivoter autour de la deuxième vis de fixation 42 de l'avant vers l'arrière. Ce pivotement fait donc descendre la première vis de fixation 41 vers l'extrémité inférieure 431 de la glissière 43.

Le support 3 est orienté ainsi vers le bas et emmène avec lui le moteur 5. Le moteur 5, ainsi orienté, présente moins de risque, voire aucun risque de pénétrer dans l'habitacle à l'endroit où sont posées les jambes du passager. L'intrusion dans l'habitacle est donc limitée.

Par ailleurs, la déformation et le pivotement de la pièce de liaison 4 absorbent davantage d'énergie pendant le crash du véhicule. La déformation de la pièce de liaison 4 permet d'affaiblir, voire de rompre, la liaison entre le support 3 et la rampe d'éjection 21. Ceci a pour but d'éviter que la rampe d'éjection 21 soit entraînée vers l'arrière par le support 3 et le moteur 5 et qu'elle rentre dans l'habitacle, ce qui risque de blesser le passager dans le véhicule.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Véhicule automobile comprenant :
- un châssis (2) comprenant un longeron (22);
- un support (3) destiné à soutenir un moteur (5) dans un compartiment moteur ; le support (3) étant fixé directement au longeron (22) ;
ledit véhicule étant **caractérisé en ce que**
- le véhicule comprend une pièce de liaison (4) reliant le support à une première structure (21) du châssis (2) qui est située au-dessus du longeron (22) ;
- la pièce de liaison (4) comprend :
-- un corps principal (40) ;
-- une première vis de fixation (41) reliant le support à la pièce de liaison (4) ;
-- une deuxième vis de fixation (42) reliant le châssis (2) à la pièce de liaison (4);
-- au moins une aile latérale (44) disposée le long du corps principal (40); **caractérisé en ce que** la pièce de liaison (4) comprend en outre une glissière (43) réalisée dans le corps principal (40) et recevant les première et deuxième vis de fixation (41, 42).

2. Véhicule selon la revendication 1, **caractérisé en ce que** la première structure (21) du châssis est une rampe d'éjection (21) destinée à éjecter un élément contenu dans le compartiment moteur dans une direction l'éloignant du sol lors d'un choc frontal.

3. Véhicule selon la revendication 1 ou la revendication 2, **caractérisé en ce que** le couple de serrage appliqué aux première et deuxième vis de fixation (41,42) est compris entre 19 Nm et 21.5 Nm.

4. Véhicule selon l'une des revendications précédentes, **caractérisé en ce que** la portion (25) de la première structure (21), qui est en contact avec la pièce de liaison (4), présente une épaisseur égale ou supérieure à l'épaisseur (e) de la pièce de liaison (4).

5. Véhicule selon l'une des revendications précédentes, **caractérisé en ce que** la portion (35) du support (3), qui est en contact avec la pièce de liaison (4), présente une épaisseur égale ou supérieure à l'épaisseur (e) de la pièce de liaison (4).

6. Véhicule selon l'une des revendications précédentes, **caractérisé en ce que** la pièce de liaison (4) comprend deux ailes latérales (44) parallèles et disposées en symétrie par rapport à la glissière (43) centrale.

7. Véhicule selon l'une des revendications précédentes, **caractérisé en ce que** la ou les ailes latérales (44) sont venues de matière avec le corps principal (40) et formées par pliage.

## Patentansprüche

1. Kraftfahrzeug, umfassend:
- ein Fahrgestell (2) mit einem Längsträger (22);
- eine Stütze (3), die dazu bestimmt ist, einen Motor (5) in einem Motorraum zu stützen; wobei die Stütze (3) unmittelbar am Längsträger (22) befestigt ist;
wobei das Fahrzeug **dadurch gekennzeichnet ist, dass**
- das Fahrzeug ein erstes Verbindungsstück (4) umfasst, das die Stütze mit einer ersten Struktur (21) des Fahrgestells (2) verbindet, die sich oberhalb des Längsträgers (22) befindet;
- wobei das Verbindungsstück (4) Folgendes umfasst:
-- einen Hauptkörper (40);
-- eine erste Befestigungsschraube (41), die die Stütze mit dem Verbindungsstück (4) verbindet;
-- eine zweite Befestigungsschraube (42), die das Fahrgestell (2) mit dem Verbindungsstück (4) verbindet;
-- mindestens einen Seitenflügel (44), der entlang des Hauptkörpers (40) angeordnet ist;
**dadurch gekennzeichnet, dass** das Verbindungsstück (4) ferner eine Gleitschiene (43) umfasst, die im Hauptkörper (40) ausgebildet ist und die erste und die zweite Befestigungsschraube (41, 42) aufnimmt.

2. Fahrzeug nach Anspruch 1, **dadurch gekennzeichnet, dass** die erste Struktur (21) des Fahrgestells eine Schleuderrampe (21) ist, die dazu bestimmt ist, ein im Motorraum enthaltenes Element bei einem Frontalaufprall in eine Richtung weg vom Boden zu schleudern.

3. Fahrzeug nach Anspruch 1 oder Anspruch 2, **dadurch gekennzeichnet, dass** das auf die erste und die zweite Befestigungsschraube (41, 42) aufgebrachte Drehmoment zwischen 19 Nm und 21,5 Nm liegt.

4. Fahrzeug nach einem der vorangehenden Ansprüche, **dadurch gekennzeichnet, dass** der Abschnitt (25) der ersten Struktur (21), der mit dem Verbindungsstück (4) in Kontakt steht, eine Dicke aufweist, die gleich der Dicke (e) des Verbindungsstücks (4) oder größer ist.

5. Fahrzeug nach einem der vorangehenden Ansprüche, **dadurch gekennzeichnet, dass** der Abschnitt (35) der Stütze (3), der mit dem Verbindungsstück (4) in Kontakt steht, eine Dicke aufweist, die gleich der Dicke (e) des Verbindungsstücks (4) oder größer ist.

6. Fahrzeug nach einem der vorangehenden Ansprüche, **dadurch gekennzeichnet, dass** das Verbindungsstück (4) zwei Seitenflügel (44) umfasst, die parallel und symmetrisch zur mittleren Gleitschiene (43) angeordnet sind.

7. Fahrzeug nach einem der vorangehenden Ansprüche, **dadurch gekennzeichnet, dass** der oder die Seitenflügel (44) einstückig mit dem Hauptkörper (40) gefertigt und durch Falten ausgebildet sind.

## Claims

1. Motor vehicle comprising:
- a chassis (2) comprising a longitudinal member (22) ;
- a support (3) which is intended to support an engine (5) in an engine compartment; the support (3) being fixed directly to the longitudinal member (22);
said vehicle being **characterized in that**
- the vehicle comprises a connection component (4) which connects the support to a first structure (21) of the chassis (2) which is located above the longitudinal member (22);
- the connection component (4) comprises:
-- a main body (40);
-- a first fixing screw (41) which connects the support to the connection component (4);
-- a second fixing screw (42) which connects the chassis (2) to the connection component (4);
-- at least one lateral wing (44) which is arranged along the main body (40);
**characterized in that** the connection component (4) further comprises a sliding member (43) which is produced in the main body (40) and which receives the first and second fixing screws (41, 42).

2. Vehicle according to Claim 1, **characterized in that** the first structure (21) of the chassis is an ejection ramp (21) which is intended to eject an element contained in the engine compartment in a direction moving it away from the ground in the event of a front-end impact.

3. Vehicle according to Claim 1 or Claim 2, **characterized in that** the clamping torque applied to the first and second fixing screws (41, 42) is between 19 Nm and 21.5 Nm.

4. Vehicle according to one of the preceding claims, **characterized in that** the portion (25) of the first structure (21) which is in contact with the connection component (4) has a thickness which is equal to or greater than the thickness (e) of the connection component (4).

5. Vehicle according to one of the preceding claims, **characterized in that** the portion (35) of the support (3) which is in contact with the connection component (4) has a thickness which is equal to or greater than the thickness (e) of the connection component (4).

6. Vehicle according to one of the preceding claims, **characterized in that** the connection component (4) comprises two parallel lateral wings (44) which are arranged symmetrically relative to the central sliding member (43).

7. Vehicle according to one of the preceding claims, **characterized in that** the lateral wing(s) (44) is/are integral with the main body (40) and formed by means of bending.
